(19) Europäisches Patentamt
European Patent Office
Office européen des brevets

(11) **EP 0 670 996 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(21) Anmeldenummer: **94926090.5**

(22) Anmeldetag: **10.09.1994**

(51) Int Cl.6: **G01L 23/22**, F02P 5/04

(86) Internationale Anmeldenummer:
**PCT/DE94/01041**

(87) Internationale Veröffentlichungsnummer:
**WO 95/08760 (30.03.1995 Gazette 1995/14)**

(54) **EINRICHTUNG ZUR FEHLERERKENNUNG BEI EINER VORRICHTUNG ZUR KLOPFERKENNUNG**

DEVICE FOR FAULT RECOGNITION IN A KNOCK-DETECTING DEVICE

SYSTEME PERMETTANT DE DETECTER DES DEFAUTS DANS UN DISPOSITIF DE DETECTION DE COGNEMENTS

(84) Benannte Vertragsstaaten:
**CH DE ES FR GB IT LI SE**

(30) Priorität: **25.09.1993 DE 4332711**

(43) Veröffentlichungstag der Anmeldung:
**13.09.1995 Patentblatt 1995/37**

(73) Patentinhaber: **ROBERT BOSCH GMBH**
**70442 Stuttgart (DE)**

(72) Erfinder:
- **UNLAND, Stefan**
  **D-71701 Schwieberdingen (DE)**
- **TORNO, Oskar**
  **D-71701 Schwieberdingen (DE)**
- **HAEMING, Werner**
  **D-74861 Neudenau (DE)**
- **ROTHHAAR, Ulrich**
  **D-70469 Stuttgart (DE)**
- **SURJADI, Iwan**
  **D-71665 Vaihingen (DE)**
- **HILBERT, Wolfgang**
  **D-71696 Moeglingen (DE)**
- **SLOBODA, Robert**
  **D-71706 Markgroeningen (DE)**
- **BAEUERLE, Michael**
  **D-74354 Besigheim (DE)**

(56) Entgegenhaltungen:
**WO-A-89/11088          DE-A- 3 419 727**
**FR-A- 2 468 113          FR-A- 2 524 647**
**FR-A- 2 571 141**

- **PATENT ABSTRACTS OF JAPAN vol. 7, no. 249 (P-234) (1394) 5. November 1983 & JP,A,58 135 435 (TOYOTA JIDOSHA KOGYO K.K.) 12. August 1983**
- **PATENT ABSTRACTS OF JAPAN vol. 9, no. 194 (M-403) (1917) 10. August 1985 & JP,A,60 060 274 (HITACHI SEISAKUSHO K.K.) 6. April 1985**
- **PATENT ABSTRACTS OF JAPAN vol. 8, no. 57 (M-283) (1494) 15. März 1984 & JP,A,58 210 368 (HITACHI SEISAKUSHO K.K.) 7. Dezember 1983**

## Beschreibung

Stand der Technik

Die Erfindung geht aus von einer Einrichtung zur Fehlererkennung nach der Gattung des Hauptanspruchs.

Es ist bekannt, daß bei Brennkraftmaschinen mit einer Klopfregelung der Klopfsensor, der die Klopferkennung ermöglicht, auf Funktionsfähigkeit überwacht werden muß. Es besteht ansonsten die Gefahr, daß bei Ausfall des Klopfsensors oder einer Komponente der zugehörigen Auswerteschaltung Klopfen nicht erkannt wird und der Arbeitspunkt der Brennkraftmaschine fehlerhaft in den klopfenden Bereich verschoben wird, was zu einer Gefährdung der Brennkraftmaschine selbst führen kann.

Es wird deshalb in der DE-PS 31 28 475 eine Prüfeinrichtung für eine Klopfregelvorrichtung an einer Brennkraftmaschine vorgeschlagen, bei der ein Klopfsensor mit einer nachgeschalteten Auswerteschaltung, die bei Auftreten von Klopfen eine Zündwinkelverschiebung auslöst, auf ordnungsgemäße Funktionsfähigkeit überprüft wird.

Bei der bekannten Einrichtung erfolgt die Klopferkennung während einer Meßphase. Dazu wird in bekannter Weise das Ausgangssignal des Klopfsensors mit einem anpassbaren Referenzwert verglichen. Aus dem Vergleichsergebnis wird Klopfen erkannt. Während einer Prüfphase wird das Ausgangssignal des Klopfsensors mit einem anderen, niedrigeren Referenzwert verglichen. Aus diesem Vergleichsergebnis werden dann Funktionsstörungen erkannt, wenn das Ausgangssignal das Referenzsignal nicht überschreitet.

Die bekannte Prüfeinrichtung für eine Klopfregelvorrichtung an einer Brennkraftmaschine hat den Nachteil, daß eine Meß- und eine Prüfphase benötigt werden und in der Meßphase keine Überprüfung möglich ist, während in der Prüfphase keine Klopferkennung durchgeführt werden kann.

Vorteile der Erfindung

Die erfindungsgemäße Einrichtgung zur Fehlererkennung bei einer Vorrichtung zur Klopferkennung bei einer Brennkraftmaschine hat demgegenüber den Vorteil, daß die Klopferkennung und die Fehlererkennung ohne Unterbrechung nebeneinander herlaufen können, so daß das Auftreten von Klopfen zu jeder Zeit erkennbar ist und auch die Fehlererkennung ununterbrochen durchgeführt werden kann.

Erzielt werden diese Vorteile, indem der Referenzpegel, bei dessen Überschreiten auf Klopfen erkannt wird, zunächst so normiert wird, daß er mit größer werdendem Motorgeräusch ansteigt. Dieser Referenzpegel wird dabei einerseits zur Klopferkennung herangezogen und andererseits wird verglichen, ob der normierte Referenzpegel innerhalb eines erlaubten Referenzpegelbandes liegt. Das erlaubte Referenzpegelband wird in geeigneter Weise insbesonders drehzahlabhängig festgelegt. Ein Fehler wird dann erkannt, wenn der normierte Referenzpegel das erlaubte Referenzpegelband verläßt. Dabei kann in vorteilhafter Weise eine Fehlererkennung nur dann erfolgen, wenn der normierte Referenzpegel nicht nur den für den normierten Referenzpegel erlaubten Bereich verläßt, sondern auch noch einen drehzahlabhängigen oberen Grenzwert übersteigt oder einen ebenfalls drehzahlabhängigen unteren Grenzwert unterschreitet.

Weitere Vorteile der Erfindung werden mit den in den Unteransprüchen angegebenen Maßnahmen erzielt. Es wird dabei in vorteilhafter Weise zur Erhöhung der Zuverlässigkeit der Fehlererkennung ein Fehler erst erkannt, wenn der normierte Referenzpegel für eine bestimmte, wählbare Zeit außerhalb des erlaubten Referenzpegelbandes liegt.

Besonders vorteilhaft ist, daß nach einer Fehlererkennung selbständig Sicherheitsmaßnahmen eingeleitet werden, die sicherstellen, daß die Brennkraftmaschine stets in einem ungefährlichen Bereich betrieben wird. Es wird dazu nach der Fehlererkennung beispielsweise eine Zündwinkelverstellung vorgenommen, die zumindest solange beibehalten wird, bis erkannt wird, daß die Vorrichtung zur Klopferkennung wieder ordnungsgemäß funktioniert.

Damit die nach einer Fehlererkennung eingeleiteten Sicherheitsmaßnahmen nicht zu früh beendet werden, wird in einer weiteren vorteilhaften Ausgestaltung der Erfindung die Aufhebung der Sicherheitsmaßnahmen erst dann eingeleitet, wenn der aktuelle Referenzpegel während einer vorgebbaren Zeit wieder innerhalb des Referenzbandes bleibt.

Zeichnung

Die Erfindung ist in der Zeichnung dargestellt und wird in der nachfolgenden Beschreibung näher erläutert. Es zeigt dabei Figur 1 die schaltungsgemäße Ausgestaltung eines Ausführungsbeispiels und Figur 2 den Zusammenhang zwischen Referenzpegel und Drehzahl. In Figur 3 ist ein Flußdiagramm, das die Vorgehensweise bei der Fehlererkennuung verdeutlicht, angegeben.

Beschreibung des Ausführungsbeispieles

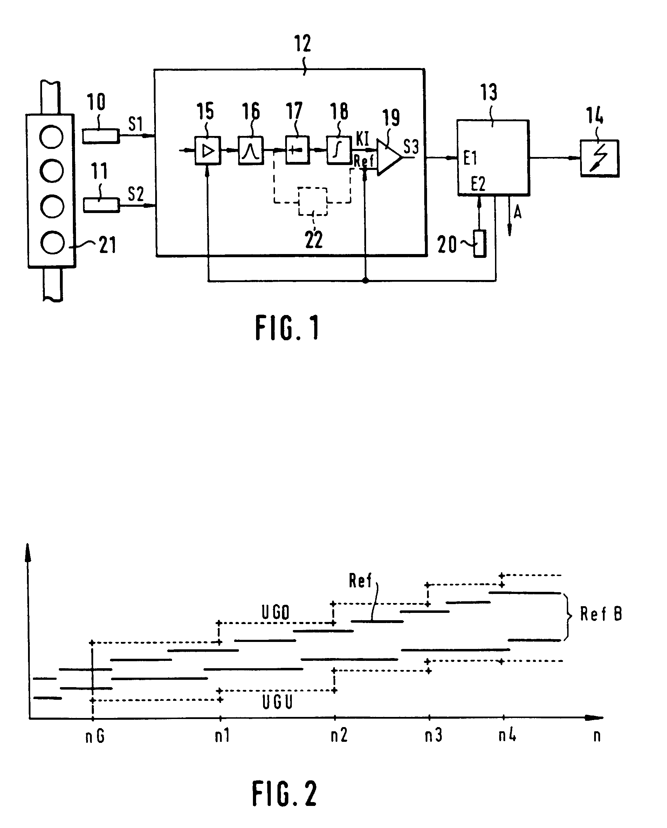

In dem in Figur 1 dargestellten Ausführungsbeispiel ist eine Vorrichtung zur Klopferkennung bei einer Brennkraftmaschine mit zwei Klopfsensoren 10, 11 dargestellt. Diese Klopfsensoren 10, 11 sind über eine Auswerteschaltung 12 mit dem Eingang E1 eines Mikrorechners 13 verbunden, der Bestandteil eines nicht näher dargestellten Steuergerätes ist.

Dem Mikrorechner 13 können über einen Eingang E2 weitere Signale zugeführt werden, die beispielsweise den Betriebszustand der Brennkraftmaschine charakterisieren. Ein solches Signal kann die Drehzahl n der Brennkraftmaschine sein, die mit einem Sensor gemessen wird. Der Mikrorechner 13 regelt in Abhängigkeit der Signale der Auswerteschaltung 12 sowie der weiteren Signale, die am Eingang E2 zugeführt werden, die Zündungsendstufe 14 der Brennkraftmaschine und/oder gegebenenfalls weitere Einrichtungen der Brennkraftmaschine, beispielsweise durch Abgabe entsprechender Signale am Ausgang A.

Der Mikrorechner 13 kann auch als diskrete Schaltung aufgebaut sein, genauso können die Auswerteschaltung 12 sowie der Mikrorechner 13 zu einer einzigen Recheneinrichtung zusammengefaßt sein, ihre Funktion kann beispielsweise mit Hilfe des Steuergerätes der Brennkraftmaschine realisiert werden.

Anstelle oder alternativ zur Beeinflussung des Zündzeitpunktes als Maßnahme zur Verlagerung des Arbeitspunktes der Brennkraftmaschine aus dem klopfenden Bereich heraus können auch die übrigen an sich bekannten Maßnahmen zur Beeinflussung des Klopfverhaltens einer Brennkraftmaschine herangezogen werden, beispielsweise die Anfettung des Verbrennungsgemisches, Zugabe von Mitteln zur Erreichung einer höheren Klopffestigkeit usw.

Die Auswerteschaltung 12 umfaßt im gewählten Ausführungsbeispiel wenigstens einen Verstärker 15 mit einstellbarem Verstärkungsfaktor, dem abwechslungsweise die von den Klopfsensoren 10, 11 gelieferten Ausgangssignale zugeführt werden. In einem sich anschließenden Bandpaß 16 werden die verstärkten Signale so gefiltert, daß die Signalanteile mit klopftypischen Frequenzen bevorzugt werden.

An den Bandpaß schließt sich eine Demodulationsschaltung 17, beispielsweise ein Gleichrichter an. Die von der Demodulationsschaltung abgegebenen Signale werden im Integrator 18 aufintegriert, die integrierten Signale KI werden an einen ersten Eingang des Komparators 19 weitergeleitet.

Dem anderen Eingang des Komparators 19 wird ein Referenzsignal bzw. ein Referenzpegel Ref zugeführt, das beispielsweise im Tiefpaß 22 durch Mittelung der Klopfsensorsignale mit großer Zeitkonstante gebildet wird. Die tatsächliche Höhe des Referenzsignales wird jedoch mit Hilfe des Mikrorechners 13 in Abhängigkeit von den Betriebszuständen der Brennkraftmaschine beeinflußt. Eine direkte Beeinflussung der Höhe der Ausgangssignale der Klopfsensoren 10, 11 ist ebenso möglich, indem der Regelverstärker 15 vom Mikrorechner 13 in geeigneter Weise angesteuert wird.

Der genaue Aufbau der einzelnen Elemente ist für das Verständnis der Erfindung nicht wesentlich und wird daher nicht näher angegeben. Ebenfalls nur symbolisch dargestellt ist die Brennkraftmaschine 21, der die Klopfsensoren 10 und 11 zugeordnet sind.

Mit Hilfe der in Figur 1 dargestellten Vorrichtung läuft die Klopferkennung wie folgt ab: Die Klopfsensoren 10, 11 registrieren die Geräusche, die von der Brennkraftmaschine 21 verursacht werden und geben entsprechende Signale S1, S2 an die Auswerteschaltung 12 ab. Diese Signale werden in geeigneter Weise gefiltert und im Regelverstärker 15 verstärkt.

Die Ausgangssignale dieses Regelverstärkers 15 werden nach der Aufbereitung im Bandpaß 16, der Demodulatorschaltung 17 und dem Integrator 18 im Komparator 19 mit einem Referenzpegel Ref verglichen. Am Ausgang des Komparators 15 entsteht ein Signal S3, das erkennen läßt, ob Klopfen vorliegt oder nicht, dabei wird auf Klopfen erkannt, wenn das Ausgangssignal des Intergators 18 den Referenzpegel in vorgebbarer Weise überschreitet.

Eine Möglichkeit zur Bildung eines besonders geeigneten Referenzsignales bzw. des Referenzpegels Ref soll nun erläutert werden. Es wird dabei im Mikrorechners 13 der Referenzpegel Ref so festgelegt bzw. normiert, daß sich von leisem zu lautem Geräusch der Brennkraftmaschine ein stetiger Anstieg im normierten Referenzpegel ergibt.

Die Bestimmung des aktuellen Referenzpegels Ref erfolgt beispielsweise nach der Formel:

$$Ref = (F1-1)/F1 \; Refa + 1/F1 \; KI$$

$$Ref = 15/16 \; Refa + 1/16 \; KI$$

In dieser Formel bedeutet:

Ref = Referenzpegel,
Refa = vorheriger Referenzpegel,
KI = Klopfintegral,
F1 = 16 = einstellbarer Faktor.

Zur Bildung des normierten Referenzpegels wird beispielsweise der Referenzpegel mit einem Normierungsfaktor V(i) multipliziert, eine mögliche Formel zur Bildung des normierten Referenzpegels ist:

$$Refn(i) = (8/V(i)) * Ref(i)$$

Es bedeuten dabei:

Refn = normierter Referenzpegel,
Ref = Referenzpegel,
V(i) = Normierungsfaktor für normierten Referenzpegel.

Die Normierung erfolgt wahlweise durch Einstellung der Verstärkungsstufe in Abhängigkeit vom Verstärkungsfaktor. Der Normierungsfaktor weist z.B. Werte von V(i) = 1, 2, 4, 8, 16, 32, 64 auf.

Zur Erkennung der Fehlfunktion der Klopfsensoren oder eines Fehlers in der Auswerteschaltung wird wie in Figur 2 dargestellt ist, ein erlaubtes Referenzpegelband RefB über der Drehzahl n definiert. Weiterhin werden drehzahlabhängig untere und obere Grenzwerte UGU, UGO definiert, die in geeignetem Abstand von den Grenzen des erlaubten Referenzpegelbandes liegen. Dabei wird der Abstand der Grenzen empirisch festgelegt, es kann auch eine fahrzeugspezifische Anpassung erfolgen.

Im Mikrorechner 13 wird laufend überprüft, ob der jeweils ermittelte aktuelle normierte Referenzpegel Refn(i) den unteren oder oberen Grenzwert unter- oder überschreitet. Ist dies der Fall, wird im einfachsten Fall auf Fehler erkannt und es werden vom Mikrorechner geeignete Gegenmaßnahmen wie die Verstellung der Zündung oder eine Gemischanfettung eingeleitet. Die eingeleiteten Sicherheitsmaßnahmen werden bei dieser Fehlererkennung wieder aufgehoben, sobald der aktuelle Referenzpegel wieder innerhalb des Referenzpegelbandes liegt.

Zur Erhöhung der Zuverlässigkeit der Fehlererkennung sind weitere Überprüfungen bzw. Maßnahmen möglich, die im Falle ihrer Nichterfüllung verhindern, daß ein Defekt erkannt wird. Eine dieser Maßnahmen besteht darin, daß die Fehlererkennung erst dann durchgeführt wird, wenn die Drehzahl der Brennkraftmaschine oberhalb einer Grenzdrehzahl nG liegt.

Eine weitere Einschränkung besteht darin, daß zur Fehlererkennung geprüft wird, ob das normierte Referenzsignal Refn(i) für einen bestimmten Zeitraum tl außerhalb des erlaubten Referenzbandes liegt und die Sicherheitsmaßnahmen nur dann eingeleitet werden wenn diese Bedingung erfüllt ist.

Weiterhin ist möglich, daß die eingeleiteten Sicherheitsmaßnahmen erst dann rückgängig gemacht werden, wenn der aktuelle Referenzpegel wieder für einen weiteren vorgebbaren Zeitraum t2 innerhalb des Referenzpegelbandes RefB liegt.

In einer weiteren Ausgestaltung werden die Sicherheitsmaßnahmen wie die Spätverstellung der Zündung nur dann eingeleitet, wenn vom Mikrorechner 13 festgestellt wird, daß die Klopfregelung aktiv geschaltet ist. Die Fehlererkennung kann dabei jedoch auch erfolgen, wenn diese Bedingung nicht erfüllt ist.

Bei einer Anordnung mit mehreren Klopfsensoren kann der als defekt erkannte Klopfsensor von der Auswertung ausgeschlossen werden und die Klopfregelung nur mittels des als funktionstüchtig erkannten Klopfsensors durchgeführt werden.

In einer weiteren Ausgestaltung werden die Auswirkungen der Klopfregelung abgeschaltet, jedoch bleibt die Klopfregelung zur Fehlerheilung aktiv, auch können abhängig vom erkannten Fehlerzustand die aktuellen Spätverstellungen im Speicher gelöscht werden und die Spätverstellung auf Null gesetzt werden, die Klopfregeladaption ruht dann.

In Figur 2 sind erlaubte Referenzsignalpegel über der Drehzahl n aufgetragen. Es ist dabei zu erkennen, daß der erlaubte Referenzsignalpegelbereich RefB mit steigender Drehzahl größer wird. Dabei steigt sowohl der minimale erlaubte Referenzpegel als auch der maximal erlaubte Referenzpegel mit steigender Drehzahl an. Insgesamt ist dieser Anstieg jedoch so, daß sich der erlaubte Bereich RefB mit steigender Drehzahl vergrößert.

Über dem erlaubten Bereich sowie unter den erlaubten Bereich sind weitere Grenzen UGU, OGO angegeben, die sich entsprechend drehzahlabhängig verändern und als drehzahlabhängige Kennlinien in Speichern des Mikrorechner 13 abgelegt sind. Übersteigt der erlaubte Referenzsignalpegel die obere Grenze oder fällt er unter die untere Grenze wird ein Fehler erkannt, wobei wie bereits erläutert gegebenenfalls bestimmte Zeitkriterien mit berücksichtigt werden.

Als Grenzdrehzahl oberhalb der die Fehlererkennung erst aktiv wird, ist in Figur 2 der Wert nG eingetragen.

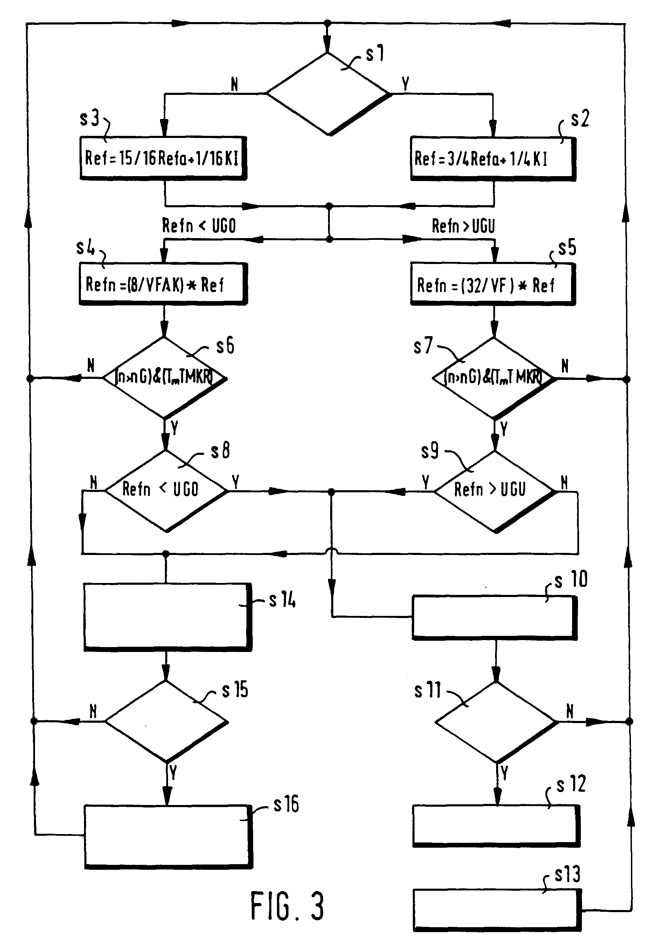

In Figur 3 ist ein Beispiel angegeben, das eine mögliche Vorgehensweise bei der Fehlererkennung verdeutlicht. Die in Figur 3 beschriebene Fehlererkennung läuft üblicherweise im Steuergerät der Brennkraftmaschine, in dem die erforderlichen Rechen-, Speicher- und Zählmittel vorhanden sind, ab. Dabei wird in einem ersten Schritt s1 vom Steuergerät aus den ihm zugeführten Daten einzelner Sensoren beispielsweise aus den Signalen eines Drehzahlsensors, eines Luftmassenmessers und/oder Drosselklappengebers erkannt, ob die Last- oder Drehzahldynamik aktiv ist. Ist dies der Fall, wird im Schritt s2 ein aktueller Referenzpegel nach der Formel $Ref = 3/4\, Refa + 1/4\, Kl$ gebildet. Wird dagegen im Schritt sl erkannt, daß keine Last- oder Drehzahldynamik vorliegt. Wird im Schritt s3 der aktuelle Referenzpegel nach der Gleichung $Ref = 15/16\, Refa + 1/16\, Kl$ gebildet.

Ausgehend von diesen Werten für den aktuellen Referenzpegel erfolgt in den folgenden Schritten die Überprüfung, ob der normierte Referenzpegel Refn kleiner als UGO ist bzw. es wird geprüft, ob der normierte Referenzpegel größer als ein unterer Grenzwert UGU ist.

Dazu wird zunächst im Schritt s4 der normierte Referenzpegel nach der Formel $Refn = (8/VFAK) \times Ref$ gebildet. Im Schritt s5 wird der normierte Referenzpegel nach Formel $(32/VAFK) \times Ref$ gebildet.

In den Schritten s6 bzw. s7 wird geprüft, ob die Drehzahl n größer ist als die Grenzdrehzahl nG und es wird geprüft, ob die Motortemperatur Tmot größer ist als ein kritischer Wert TNKR. Die Schritte s6 und s7 sind identisch, sie gehen jedoch von den in Schritten s4 oder s5 ermittelten normierten Referenzpegeln aus.

Wird in den Schritten s6, s7 erkannt, daß die Bedingungen nicht erfüllt sind, beginnt das Programm erneut mit dem Schritt s1. Wird dagegen erkannt, daß die Bedingungen erfüllt sind, geht das Programm zum jeweils nächsten Schritt s8 bzw. s9 über. Die Bedingung, daß die Motortemperatur oberhalb eines kritischen Wertes liegen muß, kann in Schritt s6 bzw. s7 auch entfallen.

Im Schritt s8 wird geprüft, ob der normierte Referenzpegel Refn kleiner ist als der obere Grenzwert UGO. Im Schritt s9 wird geprüft, ob der normierte Referenzpegel nach Schritt s7 größer ist als der unter Grenzwert UGU. Ist die Bedingung des Schrittes s8 oder die Bedingung des Schrittes s9 erfüllt, wird im Schritt s10 ein Fehlerzähler dekrementiert, also um 1 heruntergezählt. Im Schritt s10 wird geprüft, ob der Fehlerzähler bereits den Wert 0 erreicht hat, ist dies nicht der Fall, beginnt das Programm erneut mit Schritt sl, ist dagegen der Fehlerzähler auf 0 werden im Schritt s12 Ersatzmaßnahmen aktiviert.

Wird im Schritt sll erkannt, daß der Fehlerzähler nicht gleich 0 ist, beginnt das Programm für den nächsten Zylinder, dies ist mit Schritt s13 symbolisiert. Wird in den Schritten s8 bzw. s9 erkannt, daß der normierte Referenzwert Refn kleiner ist als der obere Grenzwert UGO oder größer ist als der untere Grenzwert UGU, wird im Schritt s14 ein Heilungszähler dekrementiert bzw. ein Fehlerzähler resetiert bzw. zurückgesetzt. Es wird dann im Schritt s15 geprüft, ob der Zählwert des Heilungszählers gleich 0 ist. Ist dies nicht der Fall, beginnt das Programm mit Schritt s1 von neuem.

Befindet sich dagegen der Heilungszähler auf 0, werden die Ersatzmaßnahmen zurückgenommen, wobei die Rücknahme erst dann durchgeführt wird, wenn sich die Klopfregelung wenigstens einmal in einer nicht aktiven Phase befunden hat. Die Sicherheitsmaßnahmen werden also wieder aufgehoben, wenn der aktuelle Referenzpegel innerhalb des durch die Referenzspannungsschwellen UGO bzw. UGU vorgegebenen Bereichs liegt. Damit bei der Fehlerheilung keine Sprünge im Zündwinkel (Drehmoment) auftreten, wird der Übergang von einer Sicherheitsspätverstellung des Zündwinkels zum Normalbetrieb erst in der ersten Klopfregelungs-Nichtaktiv-Phase nach festgestellter Fehlerheilung vollzogen. Die in den Fehlerzählern abgespeicherten Werte werden dauerhaft abgespeichert, so daß sie auch beim Abschalten der Brennkraftmaschine gespeichert bleiben.

In einer Fehlerverwaltung bzw. Fehlerspeicherverwaltung können unter Verwendung von ODER-Gattern und RS-Flip-Flops die Bedingungen für die Einleitung von Ersatzmaßnahmen festgelegt werden. Ebenso kann erkannt werden, wenn ein Prüfzyklus für einen Sensor vollständig abgelaufen ist.

## Patentansprüche

1. Einrichtung zur Fehlererkennung bei einer Vorrichtung zur Klopferkennung bei einer Brennkraftmaschine, mit wenigstens einem Klopfsensor (10,11) und einer diesem nachgeschalteten Auswerteschaltung (12), die die Ausgangssignale des Klopfsensors mit einem variablen Referenzpegel (Ref), der abhängig von den Ausgangssignalen des Klopfsensors gebildet wird und mit größer werdendem Geräusch der Brennkraftmaschine anwächst, vergleicht und in Abhängigkeit vom Vergleichsergebnis Klopfen erkennt, dadurch gekennzeichnet, daß der Referenzpegel (Ref) zusätzlich normiert wird, daß ein erlaubtes Referenzpegelband (RefB) gebildet wird und ein Fehler erkannt wird, wenn ein aktueller normierter Referenzpegelwert (Refn(i)) außerhalb des erlaubten Referenzpegelbandes (RefB) liegt.

2. Einrichtung nach Anspruch 1, dadurch gekennzeichnet, daß ein Fehler nur dann erkannt wird, wenn mehrere normierte Referenzpegelwerte (Refn(i)) außerhalb des erlaubten Referenzpegelbandes liegen und/oder wenn der normierte Referenzpegel für eine vorgebbare Zeitdauer (t1) außerhalb des erlaubten Referenzpegelbandes (RefB) liegt.

3. Einrichtung nach Anspruch 1 oder 2, dadurch gekennzeichnet, daß eine Fehlererkennung erst dann erfolgt, wenn der normierte Referenzpegelwert (Refn(i)) oberhalb eines weiteren drehzahlabhängigen Grenzwertes (UGO) oder unterhalb eines weiteren drehzahlabhängigen Grenzwertes (UGU) liegt.

4. Einrichtung nach Anspruch 3, dadurch gekennzeichnet, daß diese beiden Grenzwerte in Abhängigkeit vom erlaubten Referenzpegelband (RefB) gebildet werden.

5. Einrichtung nach einem der vorhergehenden Ansprüche, dadurch gekennzeichnet, daß das erlaubte Referenzpegelband (RefB) in Abhängigkeit von der Drehzahl (n) festgelegt wird und mit steigender Drehzahl insgesamt ansteigt und sich verbreitert.

6. Einrichtung nach einem der vorhergehenden Ansprüche, dadurch gekennzeichnet, daß ein unterer Drehzahlgrenzwert (nG) festgelegt wird und eine Fehlererkennung nur bei Drehzahlen oberhalb dieses Grenzwertes (nG) vorgenommen wird.

7. Einrichtung nach einem der vorhergehenden Ansprüche, dadurch gekennzeichnet, daß eine Fehlererkennung nur bei aktiver Klopfregelung durchgeführt wird.

8. Einrichtung nach einem der vorhergehenden Ansprüche, dadurch gekennzeichnet, daß bei erkanntem Fehler Maßnahmen eingeleitet werden, insbesondere eine Verstellung des Zündwinkels und/oder eine Anfettung des Kraftstoffgemisches erfolgt, wobei diese Maßnahmen so getroffen werden, daß sich die Brennkraftmaschine in einem ungefährlichen Zustand befindet.

9. Einrichtung nach Anspruch 7, dadurch gekennzeichnet, daß die Maßnahmen wieder beendet werden, wenn sich der Referenzpegel während einer vorgebbaren Zeitdauer (t2) wieder innerhalb des zulässigen Bereiches befindet.

## Claims

1. Device for detecting faults in an apparatus for detecting knocking in an internal combustion engine, having at least one knocking sensor (10, 11) and one evaluation circuit (12) which is connected downstream of the latter and which compares the output signals of the knocking sensor with a variable reference level (Ref) which is formed as a function of the output signals of the knocking sensor and rises as the noise of the internal combustion engine becomes greater, and detects knocking as a function of the comparison result, characterized in that the reference level (Ref) is additionally normalized, in that a permitted reference level band (RefB) is formed and a fault is detected if an instantaneous, normalized reference level value (Refn(i)) lies outside the permitted reference level band (RefB).

2. Device according to Claim 1, characterized in that a fault is only detected if a plurality of normalized reference level values (Refn(i)) lie outside the permitted reference level band and/or if the normalized reference level lies outside the permitted reference level band (RefB) for a prescribable time period (t1).

3. Device according to Claim 1 or 2, characterized in that detection of faults does not take place until the normalized reference level value (Refn(i)) lies above a further engine speed-dependent limit value (UGO) or below a further engine speed-dependent limit value (UGU).

4. Device according to Claim 3, characterized in that these two limit values are formed as a function of the permitted reference level band (RefB).

5. Device according to one of the preceding claims, characterized in that the permitted reference level band (RefB) is specified as a function of the engine speed (n) and rises overall and widens as the engine speed rises.

6. Device according to one of the preceding claims, characterized in that a lower engine speed limit value (nG) is specified and detection of faults is only performed at engine speeds above this limit value (nG).

7. Device according to one of the preceding claims, characterized in that detection of faults is only carried out when the knocking control is active.

8. Device according to one of the preceding claims, characterized in that measures are initiated when a fault is detected, in particular the ignition angle is adjusted and/or the fuel mixture is made richer, these measures being devised such that the internal combustion engine is in a non-hazardous state.

9. Device according to Claim 7, characterized in that the measures are terminated again when the reference level is inside the permitted range again during a prescribable time period (t2).

## Revendications

1. Installation de détection de défaut d'un dispositif de détection de cliquetis d'un moteur à combustion interne, comprenant au moins un capteur de cliquetis (10, 11) et un circuit d'exploitation (12) en aval de celui-ci, qui compare les signaux de sortie du capteur de cliquetis à un niveau de référence variable (Ref) lui-même formé en fonction des signaux de sortie du capteur de cliquetis et qui augmente à mesure qu'augmente le bruit du moteur à combustion interne, et le cliquetis est détecté en fonction du résultat de la comparaison,
caractérisée en ce que

le niveau de référence (Ref) est en plus normalisé,
on forme une bande de niveau de référence autorisée (RefB) et on détecte un défaut si le niveau de référence normalisé, actuel, (Refn(i)) se trouve en dehors de la bande de niveau de référence autorisée (RefB).

2. Installation selon la revendication 1,
caractérisée en ce qu'

on détecte un défaut si plusieurs valeurs du niveau de référence normalisé (Refb(i)) se situent en dehors de la bande de niveau de référence autorisée et/ou si le niveau de référence normalisé se situe, pendant une durée prédéterminée (t1), en dehors de la bande de niveau de référence autorisée (RefB).

3. Installation selon la revendication ou 2,
caractérisée en ce qu'

une détection de défaut n'est constatée que si la valeur de niveau de référence normalisé (Refn(i)) se situe au-dessus d'une valeur limite dépendant de la vitesse de rotation (UGO) ou en dessous d'une autre valeur limite dépendant de la vitesse de rotation (UGU).

4. Installation selon la revendication 3,

caractérisée en ce que

ces deux valeurs limites sont formées en fonction de la bande de niveau de référence autorisée (RefB).

5. Installation selon l'une quelconque des revendications précédentes,
caractérisée en ce que

la bande de niveau de référence autorisée (RefB) est fixée en fonction de la vitesse de rotation (n), augmente globalement avec la vitesse de rotation, et se déploie.

6. Installation selon l'une quelconque des revendications précédentes,
caractérisée en ce qu'

on fixe une valeur limite de vitesse de rotation inférieure (nG) et on effectue une détection de défaut seulement pour les vitesses de rotation supérieures à cette valeur limite (nG).

7. Installation selon l'une quelconque des revendications précédentes,
caractérisée en ce qu'

on effectue une détection de défaut seulement lorsque la régulation de cliquetis est active.

8. Installation selon l'une quelconque des revendications précédentes,
caractérisée en ce qu'

on prend des mesures, notamment on règle l'angle d'allumage et/ou on enrichit le mélange de carburant lorsqu'un défaut est détecté, ces mesures étant prises pour que le moteur à combustion interne se trouve dans un état de fonctionnement non dangereux.

9. Installation selon la revendication 7,
caractérisée en ce qu'

on annule de nouveau les mesures prises si le niveau de référence se situe, pendant une durée prédéterminée (t2), de nouveau à l'intérieur de la plage autorisée.

EP 0 670 996 B1

FIG. 1

FIG. 2

8

s1

N          Y

s3                                                    s2

Ref=15/16Refa+1/16KI          Ref=3/4Refa+1/4KI

Refn < UGO                    Refn > UGU

s4                                                    s5

Refn =(8/VFAK) * Ref          Refn =(32/VF) * Ref

s6                                                    s7

N    (n>nG)&(T$_m$TMKR)        (n>nG)&(T$_m$TMKR)    N

Y                                    Y

s8                                                    s9

N    Refn < UGO    Y                Y    Refn > UGU    N

s14                                                   s10

s15                                                   s11

N                                                    N

Y                                    Y

s16                                                   s12

s13

FIG. 3

9